# EUROPEAN PATENT SPECIFICATION

(11) **EP 3 678 269 B1**
(45) Date of publication and mention of the grant of the patent: **07.10.2026**
(21) Application number: 19150079.2
(22) Date of filing: 02.01.2019
(51) Int. Cl.: H02H 7/26, H02H 3/00, H02H 3/04

(54) **SYSTEM, METHOD AND A COMPUTER PROGRAM PRODUCT FOR CONFIGURING A PROTECTION SYSTEM OF A POWER NETWORK**
SYSTEM, VERFAHREN UND COMPUTERPROGRAMMPRODUKT ZUR KONFIGURATION EINES SCHUTZSYSTEMS EINES STROMNETZES
SYSTÈME, PROCÉDÉ ET PRODUIT DE PROGRAMME INFORMATIQUE PERMETTANT DE CONFIGURER UN SYSTÈME DE PROTECTION D'UN RÉSEAU ÉLECTRIQUE

(43) Date of publication of application: 08.07.2020
(73) Proprietor: Siemens Aktiengesellschaft, 80333 München (DE)
(72) Inventor: AGARWAL, Abhishek, 560034 Bangalore, Karnataka (IN); G, Vijaya Bhaskara Reddy, 560068 Bangalore (IN); BEHERA, Jitendra, 560100 Bangalore (IN)
(74) Representative: Patentanwaltskanzlei WILHELM & BECK

(56) References cited:
- EP-A1- 2 194 656
- EP-A1- 3 367 527
- EP-B1- 2 194 656
- WO-A1-2009/076410
- WO-A1-2015/024676
- WO-A2-2005/043712
- US-A1- 2005 097 373
- US-A1- 2009 149 972

## Description

The present invention relates to protection systems in power networks, and more particularly to a method, a protection configuration system, and a computer program product for providing an improved and reliable protection against faults occurring in a power network.

A conventional power network typically comprises a central zone including one or more busbars connected to multiple bay zones, each bay zone comprising one or more feeders, couplers, sectionalizers, etc., and various types of power network equipment, for example, transformers, disconnectors, circuit breakers, etc. A protection system for such a power network typically comprises at least one protection unit, also referred to as an intelligent electronic device (IED), for the central zone such as a busbar protection unit, which is in connection with one or more protection units in each of the bay zones. Typically in any power network, main function of protection devices, that is, IEDs, such as relays and circuit breakers is, to protect substation equipment from faults caused by abnormal conditions in the power network, for example, over voltage, over current, etc. The protection is conventionally achieved by isolating affected sections of the network from remaining network by tripping of circuit breakers. A protection zone in any power network is defined as the part of the network which is protected by a certain protective scheme, and is established around each of the equipment present in the zone. When the fault occurs on any of the protection zones, only the circuit breakers within that zone will be opened. Thus, only the faulty element will be isolated without disturbing the rest of the network.

In order to configure protection systems, each of the protection units in the central zone and the respective bay zones are typically configured manually for communication there-between and for taking corrective actions on occurrences of faults in the power networks. The protection system configuration is typically performed by manually entering into the protection units, data associated with other protection units and data associated with power network equipment in each of the bay zones which is in connection with the respective protection units. Typically, a commissioning engineer configures protection devices in a substation based on his/her domain expertise and rules laid down as per various electrical standards for having a certain protection device in each of the feeders, busbars, etc., of a substation. However, conventional single line diagrams that represent a configured substation, fail to show protection zones. Thus, the commissioning engineer has to manually identify the zones, thereby, making it a tedious and cumbersome task as the commissioning engineer has to identify protected, unprotected, and overlapped zones of a power network, in a substation.

Document EP 3 367 527 A1 informs about an electrical power distribution system with a plurality of circuit protection devices coupled between an electrical power source and a plurality of electrical loads. Each circuit protection device includes a trip unit, a network interface communicatively coupled to a communication network, including the circuit protection devices, a processor and a memory. The memory stores instructions that, when executed by the processor, cause the processor to adjust test operational parameters based on test data to simulate a response of the trip unit to the electrical condition, generate circuit protection data based on the test data and the adjusted set of test operational parameters and transmit the circuit protection data to at least one of the communication network and a remote access device.

Document WO 2015/024676 A1 informs about a method and a system of protecting a distribution network with a line interconnecting busbars, each busbar being connectable by means of a switching device. The method divides the distribution network multiple protection areas, each comprise a busbar, a protection device and an area controller. Upon a change in connect status of a load, the logic controller in the protection area re-calculates the short circuit level of the areas. Based on the re-calculated short circuit levels, the protection settings of the areas may be adapted.

Document EP 2 194 656 A1 discloses a method and an apparatus for adapting at least one set of parameters to at least one Intelligent Electronic Device (IED) of an electrical power network, comprising: a) reading the current network status of the electrical power network, b) simulating at least one network fault in the network, c) deducing at least one new set of parameters for the at least one IED using a simulated fault current induced by the at least one simulated network fault, d) setting at least one set of parameters in at least one IED.

Document WO2005/043712A2 informs about an automatic configuration tool for use with power protection and restoration devices such as reclosers and switches in power transmission and distribution systems. An automatic configuration application provides a plurality of menus to a user on a graphical user interface to enable the user to select a plurality of options that are processed by various calculation engines to determine the configuration settings for a specific power protection and restoration device. The configuration settings that are generated are downloaded directly into the power protection and restoration device to provide protection, control and monitoring.

Furthermore, identification of a zone typically involves obtaining from the single line diagram, position of each circuit breaker configured to protect the respective zone with respect to a measuring point such as a current transformer or a power transformer. Moreover, there is no tool to assist the commissioning engineer in identifying the protection zones due to lack of live data, that is, voltage and current values, directions of flow of the current, etc., being available at the configuration stage, thereby, leading to manual errors culminating into unreliable protection against faults occurring in real time. Furthermore, after identifying protection zones and configuring them, there is lack of a full-proof method that ensures the configured protection zones are reliable and capable of dealing with all possible faults arising in the real time operation of a power network.

Therefore, it is an object of the present invention to provide a method, a protection configuration system, and a computer program product for providing a reliable configuration of protection devices in a power network at a configuration stage of the protection devices such that the configured protection devices can address faults occurring in real time.

The method, the protection configuration system, and the computer program product are disclosed herein to achieve the aforementioned object. The method disclosed herein determines one or more protection zones in the power network. As used herein, "power network" is a high, medium, and/or a low voltage transmission and/or distribution power network. The method receives a single line diagram representing the power network, such as, a substation, which is under configuration, by importing the single line diagram into the protection configuration system. Advantageously, the power network is a manually configured power network, such as by a commissioning engineer. Also used herein, "protection zones" refer to an area within the power network having one or more protection units, that is, power network protection equipment such as power relays for protection of busbars, transformers, couplers, line feeders, etc., in operable connection with one another, configured to isolate one or more sections of the power network where fault is detected, for ensuring a continuous power supply and precluding damages in the power network. The protection units comprise, for example, circuit breakers, relays, disconnectors, switchgears, etc., for providing different types protection such as line protection, transformer protection, busbar protection, etc. The protection zones are for example, a protected zone, an un-protected zone, and an overlapping zone. A protected zone has at least one protection unit therein. An un-protected zone does not have any protection units therein. An overlapping zone has more than one protection units therein. The method disclosed herein, determines the protection zones in the power network by identifying one or more protection units, that is, circuit breakers, relays, etc., in the power network, identifying at least one measurement device in the power network, and obtaining directions of current flow in the power network using configuration data available for the power network. As used herein, "measurement device" refers to devices such as current transformers, potential transformers, power transformers, etc., employed for measuring and/or stepping up and stepping down of voltages and currents present in the power network. Also, used herein, "configuration data" refers to data accessed by commissioning engineers to configure protection units in a power network and comprises, electrical standards pertaining to configuration of substations and/or communication within substations, singe line diagrams pertaining to a utility where the protection units are being configured, etc. Advantageously, the configuration data is stored in a power network database accessible by commissioning engineers. Alternatively, the configuration data may be derived from knowledge and expertise of the commissioning engineer. The method determines the protection zones based on the aforementioned protection unit(s), measurement device(s), and the current flow directions. For example, a protected zone comprises one protection unit, at least one measurement device, and a current flowing therethrough, an un-protected zone comprises no protection units, one or more measurement devices, and a current flowing therethrough, and an overlapping zone comprises more than one protection units, more than one measurement devices, and a current flowing therethrough.

The method disclosed herein, simulates at least one network fault for each of the protection zones. As used herein, "network fault" refers to symmetrical faults as well as unsymmetrical faults comprising line to line, line to ground, line to line to ground, line to line to line, line to line to line to ground, etc. The method simulates the network fault by determining a voltage rating and a current rating associated with each of the protection zones, that is, voltage rating and current rating of each protection unit, each measurement device, in the protection zone, and obtaining fault data from a power network database based on the voltage rating and the current rating. Thus, advantageously, the method simulates all predictable network faults that may occur in the protection zone based on historical data stored in the power network database. The method further comprises, virtually injecting the network fault in the protection zone associated therewith, that is, the method applies the simulated network faults in each of the protection zones to verify and validate the configuration of each of the protection units in the protection zones. The method further comprises managing configuration of one or more protection units of the protection zones based on a response of the protection units to the network fault. As used herein, the term "response" refers to reaction of the protection unit to the virtually injected network fault at a time instant. The response comprises, a detection of the network fault, that is, taking an action such as tripping, or a non-detection of the network fault, that is, absence of any action.

The method manages configurations of the protection units by receiving one or more configuration parameters associated with each of the protection zones in which the response of the protection unit is a non-detection of the network fault, using configuration data available for the power network, and determining a configuration applicable for each of the protection units based on the configuration parameters, from a power network database. As used herein, "configuration parameters" refer to configuration data associated with each network element present in the protection zone. The configuration data comprises for example, a voltage rating, a current rating, a type, a threshold, a configuration, etc., associated with each network element in the protection zone, such as, transformers, busbars, feeders, loads, protection units, etc. Also, used herein, "power network database" refers to, a structured query language (SQL) data store or a not only SQL (NoSQL) data store. In an embodiment, according to the present invention, the power network database can also be a location on a file system directly accessible. In another embodiment, according to the present invention, the power network database is configured as cloud-based database implemented in a cloud computing environment, where computing resources are delivered as a service over a communication network. As used herein, "cloud computing environment" refers to a processing environment comprising configurable computing physical and logical resources, for example, networks, servers, storage, applications, services, etc., and data distributed over the communication network, for example, the internet. The cloud computing environment provides on-demand network access to a shared pool of the configurable computing physical and logical resources. The communication network is, for example, a wired network, a wireless network, a communication network, or a network formed from any combination of these networks.

Thus, the method comprises generating a recommendation of a configuration to be applied to each protection unit, the response for which was non-detection of the applied network fault. The method determines a recommended configuration to the commissioning engineer, advantageously, based on historical data of valid configurations stored in the power network database in form of a look up table. According to this embodiment, the method determines the recommended configuration by employing an artificial-intelligence based algorithm employing one or more machine learning models. Such machine learning models may include, for example, a neural network-based model that may be capable of processing the configuration parameters to predict a valid configuration of the protection unit based on the network faults that it is expected to handle, based on historical data as well as learnings derived from real-time data pertaining to protection zone associated therewith. The method comprises predicting the valid configuration of the protection unit using one or more machine learning techniques. Such one or more machine learning techniques may include supervised and unsupervised learning techniques. For example, the method provides inputs to one or more nodes of an input layer of the artificial neural network, in form of the configuration parameters, computes product of the configuration parameters and associated weighted coefficient at each of the nodes of the input layer, computes a sum of the products of the configuration parameters and the weighted coefficient at respective nodes of a first intermediate layer of the artificial neural network, computes a product of the sum of products and associated weighted coefficient at each of the nodes of the intermediate layer, determines whether there is another intermediate layer of the artificial neural network, and if there is another intermediate layer, repeats the steps of computing sum of products and computing products of sum of products. if there isn't an intermediate layer, the method computes sum of the products computed at a node of an output layer of the artificial neural network and determines, for example using a look up table stored in the power network database, the configuration corresponding to the sum of products, that is, various parameters to be set into each protection unit for ensuring a reliable configuration of the protection units of the power network. According to this embodiment, the weighted coefficients are computed through training the artificial neural network using historical data pertaining to valid protection configurations used in a power network. The trained artificial neural network is then used to determine a valid configuration based on existing configuration parameters associated with the protection units that are being configured by the commissioning engineers. According to this embodiment, the artificial neural network is, for example, a propagation based neural network.

According to the present invention, also disclosed herein is a protection configuration system for configuring a protection unit in a power network. The protection configuration system comprises a non-transitory computer readable storage medium storing computer program instructions defined by modules of the protection configuration system and at least one processor communicatively coupled to the non-transitory computer readable storage medium, executing the defined computer program instructions for configuring the protection unit. The modules of the protection configuration system comprise a protection zone determination module, a fault simulation module, and a configuration management module. The protection zone determination module determines one or more protection zones in the power network. The fault simulation module simulates at least one network fault for each of the protection zones, and virtually injects the network fault in the protection zone associated therewith. The configuration management module manages configuration of one or more protection units of the protection zones, based on a response of the one or more protection units to the network fault.

According to the present invention, also disclosed herein, is a computer program product comprising a non-transitory computer readable storage medium storing computer program codes that comprise instructions executable by at least one processor for performing the method disclosed above for configuring protection unit in a power network.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIGS 1A-1D: are process flowcharts illustrating a method for configuring a protection unit in a power network.
- FIG 2: illustrates a protection configuration system for configuring a protection unit in a power network.
- FIG 3: is a block diagram illustrating architecture of a computer system employed by the protection configuration system illustrated in FIG 2 for configuring a protection unit in a power network.
- FIGS 4A-4B: illustrate screenshots of a graphical user interface provided by the protection configuration system for configuring the protection units in a power network.

Various embodiments are described with reference to the drawings, wherein like reference numerals are used to refer to like elements throughout. In the following description, for the purpose of explanation, numerous specific details are set forth in order to provide thorough understanding of one or more embodiments of the present invention. It may be evident that such embodiments may be practiced without these specific details.

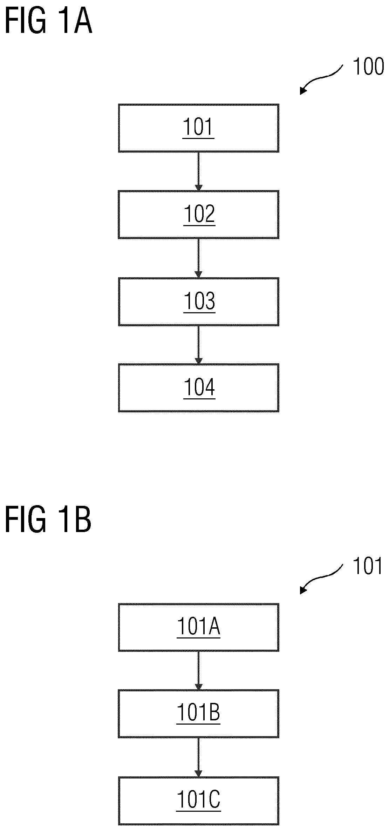

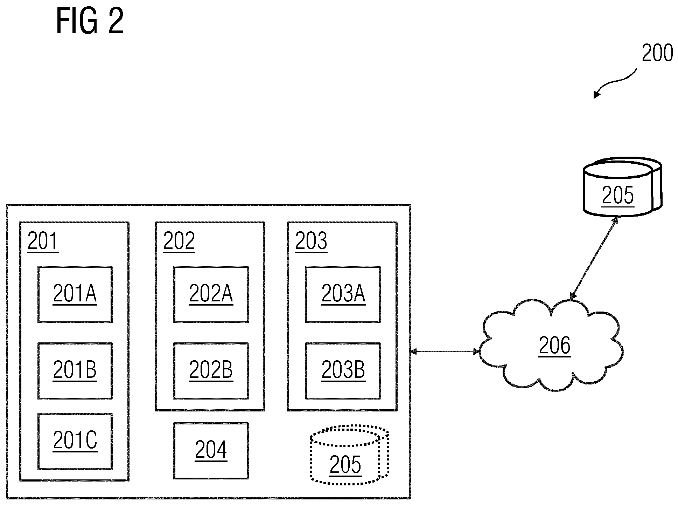

FIGS 1A-1D are a process flowcharts illustrating a method for configuring a protection unit in a power network. FIG 1A is a process flowchart 100 illustrating a method employing a protection configuration system illustrated in FIG 2, comprising at least one processor configured to execute computer program instructions for configuring a protection unit in a power network. The protection configuration system determines 101 one or more protection zones in the power network. The protection configuration system simulates 102 at least one network fault for each of the protection zones. The protection configuration system virtually injects 103 the network fault in the protection zone associated therewith. The protection configuration system manages 104 configuration of one or more protection units of the protection zones, based on a response of the one or more protection units to the network fault.

FIG 1B is a process flowchart 101 illustrating a method for determining one or more protection zones in the power network by employing the protection configuration system. The protection configuration system receives 101A a representation of the power network in form of a single line diagram of the power network.

This single line diagram comprises multiple graphical objects defining various network elements of the power network such as busbars, circuit breakers, transformers, etc. The protection configuration system receives the single line diagram via an import from a power network database comprising multiple representations of various power networks in various geographical locations, or, as an uploaded input from a commissioning engineer via a graphical user interface, for example, via power network editor software used for configuring the single line diagram. The single line diagram is in a format comprising, for example, extensible markup language (XML), hypertext markup language (HTML), etc. In an embodiment, the protection configuration system after receiving the single line diagram, also verifies 101A quality of the received single line diagram, for example, by performing a connectivity check of various network elements in the power network to one another.

The protection configuration system identifies 101B one or more protection units and at least one measurement device in the power network using the single line diagram. The protection configuration system obtains 101C directions of current flow in the power network using the single line diagram and other configuration data available for the power network, that is, based on the ratings of various network elements present in the power network.

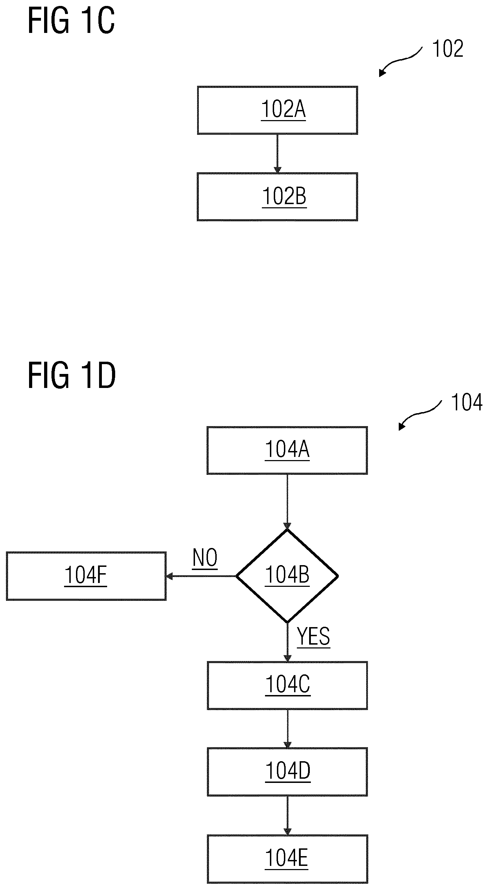

FIG 1C is a process flowchart 102 illustrating a method for simulating the network fault for each of the protection zones including protected, unprotected, and overlapping zones, by employing the protection configuration system. The protection configuration system determines 102A a voltage rating and a current rating associated with each of the protection zones, for example using the configuration data available. The protection configuration system obtains 102B fault data from a power network database based on the voltage rating and the current rating. The power network database stores historical data pertaining to faults that have occurred for various topologies in a power network. The protection configuration system then simulates the network fault based on the fault data obtained, that is, creates a fault condition by varying one or more parameters of one or more network elements in the power network to create a fault condition.

FIG 1D is a process flowchart 104 illustrating a method for managing configuration of one or more protection units of the protection zones, by employing the protection configuration system. The protection configuration system receives 104A a response of each of the protection units after the simulated network fault is virtually injected into the protection zones. The protection configuration system checks 104B whether the response is non-detection of the network fault. If no, then the protection configuration system stores 104F configuration of the protection units in the protection zone in the power network database as valid configuration. If yes, then the protection configuration system receives 104C one or more configuration parameters associated with the protection zone. The protection configuration system determines 104D a configuration applicable for each of the protection units based on the configuration parameters from a power network database by employing the artificial neural network modeling techniques. The protection configuration system generates 104E a recommendation for the commissioning engineer with the configuration to ensure reliable and valid configuration of the protection zone in view of all predictable network faults that the protection zone may encounter.

FIG 2 illustrates a protection configuration system 200 for configuring a protection unit in a power network. The protection configuration system 200, is installed on and accessible by a user device, for example, a personal computing device, a workstation, a client device, a network enabled computing device, any other suitable computing equipment, and combinations of multiple pieces of computing equipment. The protection configuration system 200 disclosed herein is in operable communication with a power network database 205, for example, over a communication network 206. The communication network 206 is, for example, a wired network, a wireless network, a communication network, or a network formed from any combination of these networks. The protection configuration system 200 is downloadable and usable on the user device, or, is configured as a web-based platform, for example, a website hosted on a server or a network of servers, or, is implemented in the cloud computing environment as a cloud computing-based platform implemented as a service for analyzing data. The protection configuration system 200 is developed, for example, using Google App engine cloud infrastructure of Google Inc., Amazon Web Services^{®} of Amazon Technologies, Inc., the Amazon elastic compute cloud EC2^{®} web service of Amazon Technologies, Inc., the Google^{®} Cloud platform of Google Inc., the Microsoft^{®} Cloud platform of Microsoft Corporation, etc.

The protection configuration system 200 disclosed herein comprises a non-transitory computer readable storage medium and at least one processor communicatively coupled to the non-transitory computer readable storage medium. As used herein, "non-transitory computer readable storage medium" refers to all computer readable media, for example, non-volatile media, volatile media, and transmission media except for a transitory, propagating signal. The non-transitory computer readable storage medium is configured to store computer program instructions defined by modules, for example, 201, 202, 203, etc., of the protection configuration system 200. The processor is configured to execute the defined computer program instructions. As illustrated in FIG 2, the protection configuration system 200 comprises a graphical user interface (GUI) 204. A user using the user device can access the protection configuration system 200 via the GUI 204. The GUI 204 is, for example, an online web interface, a web based downloadable application interface such as Microsoft^{®} Windows^{®} application, etc. The protection configuration system 200 further comprises a protection zone determination module 201, a fault simulation module 202, and a configuration management module 203.

The protection zone determination module 201 determines one or more protection zones in the power network, and comprises a protection unit identification module 201A identifying one or more protection units in the power network, a measurement device identification module 201B identifying at least one measurement device in the power network, and a flow direction identification module 201C obtaining directions of current flow in the power network using configuration data available for the power network. The fault simulation module 202 simulates at least one network fault for each of the protection zones and virtually injects the network fault in the protection zone associated therewith, and comprises, a rating determination module 202A determining a voltage rating and a current rating associated with each of the protection zones, and a fault data management module 202B obtaining fault data from a power network database 205 based on the voltage rating and the current rating. The configuration management module 203 manages configuration of one or more protection units of the protection zones based on a response of the one or more protection units to the network fault, and comprises, a parameter reception module 203A receiving one or more configuration parameters associated with each of the protection zones in which the response of the protection unit is a non-detection of the network fault, using configuration data available for the power network, and a configuration determination module 203B determining a configuration applicable for each of the protection units based on the configuration parameters, from the power network database 205.

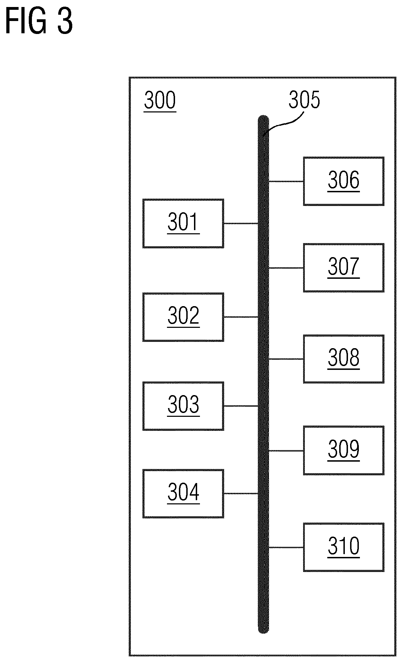

FIG 3 is a block diagram illustrating architecture of a computer system 300 employed by the protection configuration system 200 illustrated in FIG 2, for configuring a protection unit of a power network. The protection configuration system 200 employs the architecture of the computer system 300 illustrated in FIG 3. The computer system 300 is programmable using a high-level computer programming language. The computer system 300 may be implemented using programmed and purposeful hardware. As illustrated in FIG 3, the computer system 300 comprises a processor 301, a non-transitory computer readable storage medium such as a memory unit 302 for storing programs and data, an input/output (I/O) controller 303, a network interface 304, a data bus 305, a display unit 306, input devices 307, a fixed media drive 308 such as a hard drive, a removable media drive 309 for receiving removable media, output devices 310, etc. The processor 301 refers to any one of microprocessors, central processing unit (CPU) devices, finite state machines, microcontrollers, digital signal processors, an application specific integrated circuit (ASIC), a field-programmable gate array (FPGA), etc., or any combination thereof, capable of executing computer programs or a series of commands, instructions, or state transitions. The processor 301 may also be implemented as a processor set comprising, for example, a general-purpose microprocessor and a math or graphics coprocessor. The processor 301 is selected, for example, from the Intel^{®} processors, Advanced Micro Devices (AMD^{®}) processors, International Business Machines (IBM^{®}) processors, etc. The protection configuration system 200 disclosed herein is not limited to a computer system 300 employing a processor 301. The computer system 300 may also employ a controller or a microcontroller. The processor 301 executes the modules, for example, 201, 202, 203, etc., of the protection configuration system 200.

The memory unit 302 is used for storing programs, applications, and data. For example, the modules 201-204, of the protection configuration system 200 are stored in the memory unit 302 of the computer system 300. The memory unit 302 is, for example, a random-access memory (RAM) or another type of dynamic storage device that stores information and instructions for execution by the processor 301. The memory unit 302 also stores temporary variables and other intermediate information used during execution of the instructions by the processor 301. The computer system 300 further comprises a read only memory (ROM) or another type of static storage device that stores static information and instructions for the processor 301. The I/O controller 303 controls input actions and output actions performed by the protection configuration system 200.

The network interface 304 enables connection of the computer system 300 to the communication network 206. For example, the protection configuration system 200 connects to the communication network 206 via the network interface 304. In an embodiment, the network interface 304 is provided as an interface card also referred to as a line card. The network interface 304 comprises, for example, interfaces using serial protocols, interfaces using parallel protocols, and Ethernet communication interfaces, interfaces based on wireless communications technology such as satellite technology, radio frequency (RF) technology, near field communication, etc. The data bus 305 permits communications between the modules, for example, 201-2014, etc., of protection configuration system 200.

The display unit 306, via the graphical user interface (GUI) 204, displays information such as a single line diagram of the power network, user interface elements such as text fields, buttons, windows, etc., for allowing a user to provide his/her inputs such as the protection units for each of the protection zones of the power network, etc. The display unit 306 comprises, for example, a liquid crystal display, a plasma display, an organic light emitting diode (OLED) based display, etc. The input devices 307 are used for inputting data into the computer system 300. The input devices 307 are, for example, a keyboard such as an alphanumeric keyboard, a touch sensitive display device, and/or any device capable of sensing a tactile input.

Computer applications and programs are used for operating the computer system 300. The programs are loaded onto the fixed media drive 308 and into the memory unit 302 of the computer system 300 via the removable media drive 309. In an embodiment, the computer applications and programs may be loaded directly via the communication network 206. Computer applications and programs are executed by double clicking a related icon displayed on the display unit 306 using one of the input devices 307. The output devices 310 output the results of operations performed by the protection configuration system 200. For example, the protection configuration system 200 provides graphical representation of the recommended configuration for protection units, using the output devices 310. The graphical representation comprises, for example, a pull-down menu for each of the configured protection units comprising respective network elements and the parameterization data associated with each of these network elements.

The processor 301 executes an operating system, for example, the Linux^{®} operating system, the Unix^{®} operating system, any version of the Microsoft^{®} Windows^{®} operating system, the Mac OS of Apple Inc., the IBM^{®} OS/2, etc. The computer system 300 employs the operating system for performing multiple tasks. The operating system is responsible for management and coordination of activities and sharing of resources of the computer system 300.

The operating system further manages security of the computer system 300, peripheral devices connected to the computer system 300, and network connections. The operating system employed on the computer system 300 recognizes, for example, inputs provided by the users using one of the input devices 307, the output display, files, and directories stored locally on the fixed media drive 308. The operating system on the computer system 300 executes different programs using the processor 301. The processor 301 and the operating system together define a computer platform for which application programs in high level programming languages are written.

The processor 301 of the computer system 300 employed by the protection configuration system 200 retrieves instructions defined by the modules 201-204, of the protection configuration system 200 for performing respective functions disclosed in the detailed description of FIG 2. The processor 301 retrieves instructions for executing the modules, for example, 201-204, of the protection configuration system 200 from the memory unit 302. A program counter determines the location of the instructions in the memory unit 302. The program counter stores a number that identifies the current position in the program of each of the modules, for example, 201-204, etc., of the protection configuration system 200. The instructions fetched by the processor 301 from the memory unit 302 after being processed are decoded. The instructions are stored in an instruction register in the processor 301. After processing and decoding, the processor 301 executes the instructions, thereby performing one or more processes defined by those instructions.

At the time of execution, the instructions stored in the instruction register are examined to determine the operations to be performed. The processor 301 then performs the specified operations. The operations comprise arithmetic operations and logic operations. The operating system performs multiple routines for performing several tasks required to assign the input devices 307, the output devices 310, and memory for execution of the modules, for example, 201-204, etc., of the protection configuration system 200. The tasks performed by the operating system comprise, for example, assigning memory to the modules, for example, 201-204, etc., of the protection configuration system 200, and to data used by the protection configuration system 200, moving data between the memory unit 302 and disk units, and handling input/output operations. The operating system performs the tasks on request by the operations and after performing the tasks, the operating system transfers the execution control back to the processor 301. The processor 301 continues the execution to obtain one or more outputs. The outputs of the execution of the modules, for example, 201-203, etc., of the protection configuration system 200 are displayed to the user on the GUI 204.

For purposes of illustration, the detailed description refers to the protection configuration system 200 being run locally on the computer system 300; however the scope of the present invention is not limited to the protection configuration system 200 being run locally on the computer system 300 via the operating system and the processor 301, but may be extended to run remotely over the communication network 205 by employing a web browser and a remote server, a mobile phone, or other electronic devices. One or more portions of the computer system 300 may be distributed across one or more computer systems (not shown) coupled to the communication network 205.

Disclosed herein is also a computer program product comprising a non-transitory computer readable storage medium that stores computer program codes comprising instructions executable by at least one processor 301 for configuring a protection unit in a power network, as disclosed in the present invention. The computer program product comprises a first computer program code for determining one or more protection zones in the power network; a second computer program code for simulating at least one network fault for each of the protection zones; a third computer program code for virtually injecting the at least one network fault in the protection zone associated therewith; and a fourth computer program code for managing configuration of the one or more protection units of the protection zones based on a response of the one or more protection units to the network fault.

The first computer program code comprises a fifth computer program code for identifying one or more protection units in the power network; a sixth computer program code for identifying at least one measurement device in the power network; and a seventh computer program code for obtaining directions of current flow in the power network using configuration data available for the power network. The second computer program code comprises an eighth computer program code for determining a voltage rating and a current rating associated with each of the protection zones; and a ninth computer program code for obtaining fault data from a power network database based on the voltage rating and the current rating. The third computer program code comprises a tenth computer program code for receiving one or more configuration parameters associated with each of the protection zones in which the response of the protection unit is a non-detection of the network fault, using configuration data available for the power network, and an eleventh computer program code for determining a configuration applicable for said each of the protection units based on the configuration parameters, from a power network database.

In an embodiment, a single piece of computer program code comprising computer executable instructions performs one or more steps of the method according to the present invention, for configuring a protection system of a power network. The computer program codes comprising computer executable instructions are embodied on the non-transitory computer readable storage medium. The processor 301 of the computer system 300 retrieves these computer executable instructions and executes them. When the computer executable instructions are executed by the processor 301, the computer executable instructions cause the processor 301 to perform the steps of the method for configuring a protection unit in a power network.

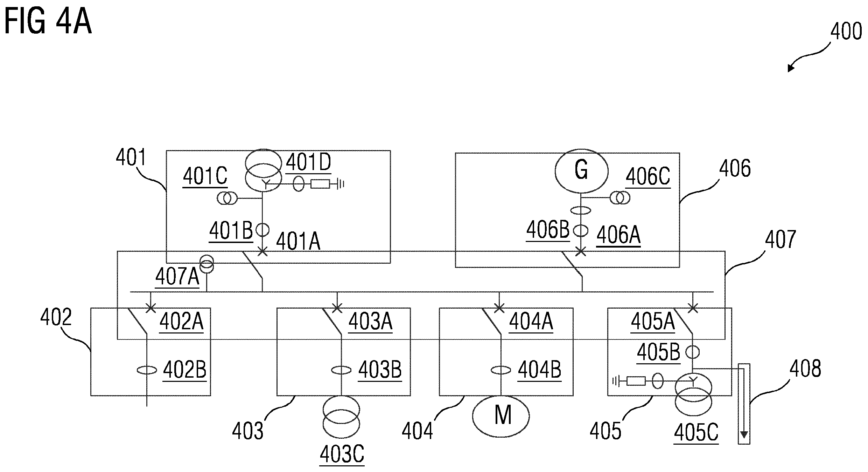

FIGS 4A-4B illustrate screenshots of a graphical user interface 204 provided by the protection configuration system 200 illustrated in FIG 2, for configuring the protection units 401A, 402A, 403A, 404A, 405A, or 406A in a power network 400. FIG 4A illustrates a single line diagram of a power network 400 comprising protection zones such as protected zones 401, 402, 403, 404, 405, 406, an un-protected zone 408, and an overlapping zone 407. The protected zones 401, 402, 403, 404, 405, 406, each have at least one protection unit 401A, 402A, 403A, 404A, 405A,

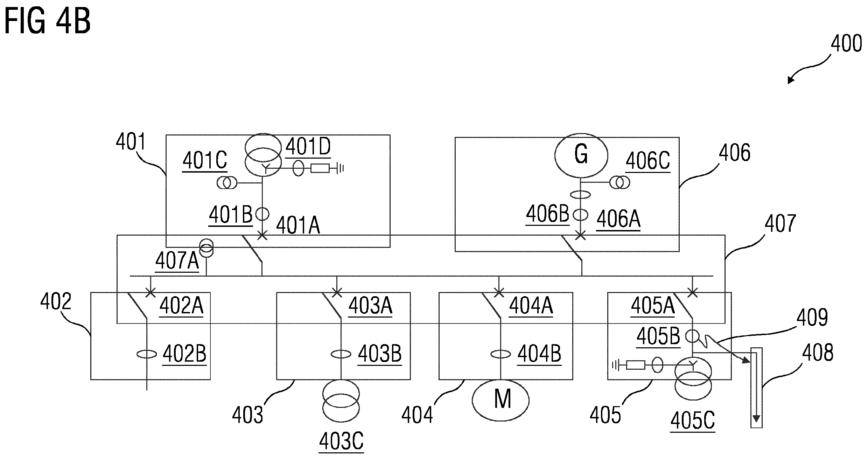

406A, respectively therein. The un-protected zone 408 has no protection unit but merely a feeder having an outgoing current. The overlapping zone 407 has more than one protection units 401A, 402A, 403A, 404A, 405A, 406A. FIG 4B illustrates a network fault 409 simulated and virtually injected into the un-protected zone 408 by the protection configuration system 200. A result of this injection of the network fault, is the protection configuration system 200 recommending inclusion of a protection unit in the un-protected zone for ensuring reliable protection of the power network 400. Similarly, the protection configuration system 200 simulates and virtually injects a network fault 409 expected to occur in each of the protection zones 401-408 and manages configuration of the protection units 401A-406A accordingly.

Thus, the method, the protection configuration system 200, and the computer program product disclosed herein identify and providing a visualization of all inherent configured protection zones during design phase to a commissioning engineer to enable him/her to identify protected, unprotected and overlapping zones and take necessary actions to protect all zones reliably.

It will be apparent that the various methods, algorithms, and computer programs disclosed herein may be implemented on computer readable media appropriately programmed for computing devices. As used herein, "computer readable media" refers to non-transitory computer readable media that participate in providing data, for example, instructions that may be read by a computer, a processor or a similar device. Non-transitory computer readable media comprise all computer readable media, for example, non-volatile media, volatile media, and transmission media, except for a transitory, propagating signal.

The computer programs that implement the methods and algorithms disclosed herein may be stored and transmitted using a variety of media, for example, the computer readable media in several manners. In an embodiment, hard-wired circuitry or custom hardware may be used in place of, or in combination with, software instructions for implementation of the processes of various embodiments. Therefore, the embodiments are not limited to any specific combination of hardware and software. In general, the computer program codes comprising computer executable instructions may be implemented in any programming language. The computer program codes or software programs may be stored on or in one or more mediums as object code. Various aspects of the method and system disclosed herein may be implemented in a non-programmed environment comprising documents created, for example, in a hypertext markup language (HTML), an extensible markup language (XML), or other format that render aspects of a graphical user interface (GUI) or perform other functions, when viewed in a visual area or a window of a browser program. Various aspects of the method and system disclosed herein may be implemented as programmed elements, or non-programmed elements, or any suitable combination thereof. The computer program product disclosed herein comprises one or more computer program codes for implementing the processes of various embodiments.

Where databases are described such as the power network database 205, it will be understood by one of ordinary skill in the art that (i) alternative database structures to those described may be readily employed, and (ii) other memory structures besides databases may be readily employed. Any illustrations or descriptions of any sample databases disclosed herein are illustrative arrangements for stored representations of information. Any number of other arrangements may be employed besides those suggested by tables illustrated in the drawings or elsewhere. Similarly, any illustrated entries of the databases represent exemplary information only; one of ordinary skill in the art will understand that the number and content of the entries can be different from those disclosed herein. Further, despite any depiction of the databases as tables, other formats including relational databases, object-based models, and/or distributed databases may be used to store and manipulate the data types disclosed herein. Likewise, object methods or behaviors of a database can be used to implement various processes such as those disclosed herein. In addition, the databases may, in a known manner, be stored locally or remotely from a device that accesses data in such a database. In embodiments where there are multiple databases in the system, the databases may be integrated to communicate with each other for enabling simultaneous updates of data linked across the databases, when there are any updates to the data in one of the databases.

The present invention can be configured to work in a network environment comprising one or more computers that are in communication with one or more devices via a network. The computers may communicate with the devices directly or indirectly, via a wired medium or a wireless medium such as the Internet, a local area network (LAN), a wide area network (WAN) or the Ethernet, a token ring, or via any appropriate communications mediums or combination of communications mediums. Each of the devices comprises processors, some examples of which are disclosed above, that are adapted to communicate with the computers. In an embodiment, each of the computers is equipped with a network communication device, for example, a network interface card, a modem, or other network connection device suitable for connecting to a network. Each of the computers and the devices executes an operating system, some examples of which are disclosed above. While the operating system may differ depending on the type of computer, the operating system will continue to provide the appropriate communications protocols to establish communication links with the network. Any number and type of machines may be in communication with the computers.

The present invention is not limited to a particular computer system platform, processor, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of systems, and is not limited to any particular distributed architecture, network, or communication protocol.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may affect numerous modifications thereto and changes may be made without departing from the scope of the invention in its aspects.

## Claims

1. A method for configuring a protection unit (401A, 402A, 403A, 404A, 405A, or 406A) in a power network (400), wherein said method is carried out by at least one processor (301), said method comprising:
- determining one or more protection zones (401, 402, 403, 404, 405, 406, 407, 408) in the power network (400) based on protection units (401A, 402A, 403A, 404A, 405A, 406A), measurement devices (401B, 401C, 401D, 402B, 403B, 403C, 404B, 405B, 405C, 406B, 406C, 407A) and current flow directions, wherein a protection zone (401, 402, 403, 404, 405, 406, 407, 408) is an area within the power network (400) having one or more protection units (401A, 402A, 403A, 404A, 405A, 406A);
- simulating at least one network fault (409) for each of the protection zones (401, 402, 403, 404, 405, 406, 407, 408) by determining a voltage rating and a current rating associated with each of the protection zones (401, 402, 403, 404, 405, 406, 407, 408),
wherein simulating the at least one network fault (409) for each of the protection zones (401, 402, 403, 404, 405, 406, 407, 408) further comprises obtaining fault data from a power network database (205) based on the voltage rating and the current rating,
wherein the power network database (205) stores historical data pertaining to faults that have occurred for various topologies in a power network (400),
wherein the power network database (205) is configured as a distributed database, said distributed database is integrated to communicate with each other over a communication network (206);
- virtually injecting the at least one network fault (409) in the protection zone (401, 402, 403, 404, 405, 406, 407, 408) associated therewith by applying the simulated at least one network fault (409) in each of the protection zones (401, 402, 403, 404, 405, 406, 407, 408) to verify and validate the configuration of each of the protection units (401A, 402A, 403A, 404A, 405A, 406A); and
- managing configuration of one or more protection units (401A, 402A, 403A, 404A, 405A, or 406A) of the protection zones (401, 402, 403, 404, 405, 406, 407, 408), based on a response of the one or more protection units (401A, 402A, 403A, 404A, 405A, 406A) to the network fault (409).

2. The method according to claim 1, wherein determining one or more protection zones (401, 402, 403, 404, 405, 406, 407, 408), comprises:
- identifying one or more protection units (401A, 402A, 403A, 404A, 405A, 406A) in the power network (400);
- identifying at least one measurement device (401B, 401C, 401D, 402B, 403B, 403C, 404B, 405B, 405C, 406B, 406C, 407A) in the power network (400); and
- obtaining directions of current flow in the power network (400) using configuration data available for the power network (400).

3. The method according to any one of the claims 1 and 2, wherein the protection zones (401, 402, 403, 404, 405, 406, 407, 408), comprise one or more of a protected zone (401, 402, 403, 404, 405, or 406), an un-protected zone (408), and an overlapping zone (407).

4. The method according to claim 1, wherein the response of the one or more protection units (401A, 402A, 403A, 404A, 405A, 406A) comprises one of a detection of the network fault (409) and a non-detection of the network fault (409).

5. The method according to claim 1, wherein managing configuration of the one or more protection units (401A, 402A, 403A, 404A, 405A, or 406A) comprises:
- receiving one or more configuration parameters associated with each of the protection zones (401, 402, 403, 404, 405, 406, 407, 408) in which the response of the protection unit (401A, 402A, 403A, 404A, 405A, or 406A) is a non-detection of the network fault (409), using configuration data available for the power network (400); and
- determining a configuration applicable for each of the protection units (401A, 402A, 403A, 404A, 405A, or 406A) based on the configuration parameters, from a power network database (205).

6. The method according to claim 5, wherein the configuration parameters comprise configuration data associated with each network element present in the protection zone (401, 402, 403, 404, 405, 406, 407, 408).

7. A protection configuration system (200) for configuring a protection unit (401A, 402A, 403A, 404A, 405A, or 406A) in a power network (400), said protection configuration system (200) comprising:
- a non-transitory computer readable storage medium storing computer program instructions defined by modules of said protection configuration system (200);
- at least one processor (301) communicatively coupled to said non-transitory computer readable storage medium, said at least one processor (301) executing said defined computer program instructions; and
- said modules of said protection configuration system (200) comprising:
∘ a protection zone determination module (201) configured to determine one or more protection zones (401, 402, 403, 404, 405, 406, 407, 408) in the power network (400) based on protection units (401A, 402A, 403A, 404A, 405A, 406A), measurement devices (401B, 401C, 401D, 402B, 403B, 403C, 404B, 405B, 405C, 406B, 406C, 407A) and current flow directions, wherein the protection zones (401, 402, 403, 404, 405, 406, 407, 408), comprise one or more of a protected zone (401, 402, 403, 404, 405, or 406), an un-protected zone (408), and an overlapping zone (407);
∘ a fault simulation module (202) configured to simulate at least one network fault (409) for each of the protection zones (401, 402, 403, 404, 405, 406, 407, 408) by determining a voltage rating and a current rating associated with each of the protection zones (401, 402, 403, 404, 405, 406, 407, 408);
∘ a rating determination module (202A) of the fault simulation module (200) configured to determine the voltage rating and the current rating associated with each of the protection zones (401, 402, 403, 404, 405, 406, 407, 408);
∘ a fault data management module (202B) configured to obtain fault data from a power network database (205) based on the voltage rating and the current rating, determined by the rating determination module (202A), wherein the power network database (205) stores historical data pertaining to faults that have occurred for various topologies in a power network (400),
wherein the power network database (205) is configured as a distributed database, said distributed database is integrated to communicate with each other over a communication network (206);
∘ the fault simulation module (202) further configured to virtually inject the at least one network fault (409) in the protection zone (401, 402, 403, 404, 405, 406, 407, 408) associated therewith by applying the simulated at least one network fault (409) in each of the protection zones (401, 402, 403, 404, 405, 406, 407, 408) to verify and validate the configuration of each of the protection units (401A, 402A, 403A, 404A, 405A, 406A); and
∘ a configuration management module (203) configured to manage configuration of one or more protection units (401A, 402A, 403A, 404A, 405A, or 406A) of the protection zones (401, 402, 403, 404, 405, 406, 407, 408), based on a response of the one or more protection units (401A, 402A, 403A, 404A, 405A, 406A) to the network fault (409), wherein the response of the one or more protection units (401A, 402A, 403A, 404A, 405A, 406A) comprises one of a detection of the network fault (409) and a non-detection of the network fault (409).

8. The protection configuration system (200) according to claim 7, wherein the protection zone determination module (201), comprises:
- a protection unit identification module (201A) configured to identify one or more protection units (401A, 402A, 403A, 404A, 405A, 406A) in the power network (400);
- a measurement device identification module (201B) configured to identify at least one measurement device (401B, 401C, 401D, 402B, 403B, 403C, 404B, 405B, 405C, 406B, 406C, 407A) in the power network (400); and
- a flow direction identification module (201C) configured to obtain directions of current flow in the power network (400) using configuration data available for the power network (400).

9. The protection configuration system (200) according to claim 7, wherein the configuration management module (203) comprises:
- a parameter reception module (203A) configured to receive one or more configuration parameters associated with each of the protection zones (401, 402, 403, 404, 405, 406, 407, 408) in which the response of the protection unit (401A, 402A, 403A, 404A, 405A, or 406A) is a non-detection of the network fault (409), using configuration data available for the power network (400), wherein the configuration parameters comprise configuration data associated with each network element present in the protection zone (401, 402, 403, 404, 405, 406, 407, 408); and
- a configuration determination module (203B) configured to determine a configuration applicable for said each of the protection units (401A, 402A, 403A, 404A, 405A, or 406A) based on the configuration parameters, from a power network database (205).

10. A computer program product comprising a non-transitory computer readable storage medium, said non-transitory computer readable storage medium storing computer program codes that comprise instructions executable by at least one processor (301), said computer program codes comprising:
- a first computer program code for determining one or more protection zones (401, 402, 403, 404, 405, 406, 407, 408) in the power network (400) based on protection units (401A, 402A, 403A, 404A, 405A, 406A), measurement devices (401B, 401C, 401D, 402B, 403B, 403C, 404B, 405B, 405C, 406B, 406C, 407A) and current flow directions, wherein the protection zones (401, 402, 403, 404, 405, 406, 407, 408), comprise one or more of a protected zone (401, 402, 403, 404, 405, or 406), an un-protected zone (408), and an overlapping zone (407);
- a second computer program code for simulating at least one network fault (409) for each of the protection zones (401, 402, 403, 404, 405, 406, 407, 408),
wherein the second computer program code comprises an eighth computer program code for determining a voltage rating and a current rating associated with each of the protection zones (401, 402, 403, 404, 405, 406, 407, 408),
wherein the second computer program code further comprises a ninth program code for obtaining fault data from a power network database (205) based on the voltage rating and the current rating,
wherein the power network database (205) stores historical data pertaining to faults that have occurred for various topologies in a power network (400),
wherein the power network database (205) is configured as a distributed database, said distributed database is integrated to communicate with each other over a communication network (206);
- a third computer program code for virtually injecting the at least one network fault (409) in the protection zone (401, 402, 403, 404, 405, 406, 407, 408) associated therewith by applying the simulated at least one network fault (409) in each of the protection zones (401, 402, 403, 404, 405, 406, 407, 408) to verify and validate the configuration of each of the protection units (401A, 402A, 403A, 404A, 405A, 406A); and
- a fourth computer program code for managing configuration of the one or more protection units (401A, 402A, 403A, 404A, 405A, or 406A) of the protection zones (401, 402, 403, 404, 405, 406, 407, 408), based on a response of the one or more protection units (401A, 402A, 403A, 404A, 405A, 406A) to the network fault (409), wherein the response of the one or more protection units (401A, 402A, 403A, 404A, 405A, 406A) comprises one of a detection of the network fault (409) and a non-detection of the network fault (409).

11. The computer program product according to claim 10, wherein the first computer program code comprises:
- a fifth computer program code for identifying one or more protection units (401A, 402A, 403A, 404A, 405A, 406A) in the power network (400);
- a sixth computer program code for identifying at least one measurement device (401B, 401C, 401D, 402B, 403B, 403C, 404B, 405B, 405C, 406B, 406C, 407A) in the power network (400); and
- a seventh computer program code for obtaining directions of current flow in the power network (400) using configuration data available for the power network (400).

12. The computer program product according to claim 10, wherein the third computer program code comprises:
- a tenth computer program code for receiving one or more configuration parameters associated with each of the protection zones (401, 402, 403, 404, 405, 406, 407, 408) in which the response of the protection unit (401A, 402A, 403A, 404A, 405A, or 406A) is a non-detection of the network fault (409), using configuration data available for the power network (400), wherein the configuration parameters comprise configuration data associated with each network element present in the protection zone (401, 402, 403, 404, 405, 406, 407, 408); and
- an eleventh computer program code for determining a configuration applicable for said each of the protection units (401A, 402A, 403A, 404A, 405A, or 406A) based on the configuration parameters, from a power network database (205).

## Patentansprüche

1. Verfahren zum Konfigurieren einer Schutzeinheit (401A, 402A, 403A, 404A, 405A oder 406A) in einem Leistungsnetz (400), wobei das Verfahren durch mindestens einen Prozessor (301) ausgeführt wird, wobei das Verfahren Folgendes umfasst:
- Bestimmen einer oder mehrerer Schutzzonen (401, 402, 403, 404, 405, 406, 407, 408) in dem Leistungsnetz (400) basierend auf Schutzeinheiten (401A, 402A, 403A, 404A, 405A, 406A), Messvorrichtungen (401B, 401C, 401D, 402B, 403B, 403C, 404B, 405B, 405C, 406B, 406C, 407A) und Stromflussrichtungen, wobei eine Schutzzone (401, 402, 403, 404, 405, 406, 407, 408) ein Bereich innerhalb des Leistungsnetzes (400) ist, der eine oder mehrere Schutzeinheiten (401A, 402A, 403A, 404A, 405A, 406A) aufweist;
- Simulieren mindestens eines Netzfehlers (409) bei jeder der Schutzzonen (401, 402, 403, 404, 405, 406, 407, 408) durch Bestimmen eines Spannungsnennwerts und eines Stromnennwerts, die mit jeder der Schutzzonen (401, 402, 403, 404, 405, 406, 407, 408) assoziiert sind,
wobei das Simulieren des mindestens einen Netzfehlers (409) bei jeder der Schutzzonen (401, 402, 403, 404, 405, 406, 407, 408) ferner Erhalten von Fehlerdaten aus einer Leistungsnetzdatenbank (205) basierend auf dem Spannungsnennwert und dem Stromnennwert umfasst,
wobei die Leistungsnetzdatenbank (205) historische Daten in Bezug auf Fehler speichert, die bei verschiedenen Topologien in einem Leistungsnetz (400) aufgetreten sind,
wobei die Leistungsnetzdatenbank (205) als eine verteilte Datenbank konfiguriert ist, wobei die verteilte Datenbank zum Kommunizieren miteinander über ein Kommunikationsnetz (206) integriert ist;
- virtuelles Einspeisen des mindestens einen Netzfehlers (409) in die damit assoziierte Schutzzone (401, 402, 403, 404, 405, 406, 407, 408) durch Anwenden des simulierten mindestens einen Netzfehlers (409) in jeder der Schutzzonen (401, 402, 403, 404, 405, 406, 407, 408) zum Verifizieren und Validieren der Konfiguration jeder der Schutzeinheiten (401A, 402A, 403A, 404A, 405A, 406A); und
- Verwalten der Konfiguration einer oder mehrerer Schutzeinheiten (401A, 402A, 403A, 404A, 405A oder 406A) der Schutzzonen (401, 402, 403, 404, 405, 406, 407, 408) basierend auf einer Reaktion der einen oder der mehreren Schutzeinheiten (401A, 402A, 403A, 404A, 405A, 406A) auf den Netzfehler (409).

2. Verfahren nach Anspruch 1, wobei das Bestimmen einer oder mehrerer Schutzzonen (401, 402, 403, 404, 405, 406, 407, 408) Folgendes umfasst:
- Identifizieren einer oder mehrerer Schutzeinheiten (401A, 402A, 403A, 404A, 405A, 406A) in dem Leistungsnetz (400);
- Identifizieren mindestens einer Messvorrichtung (401B, 401C, 401D, 402B, 403B, 403C, 404B, 405B, 405C, 406B, 406C, 407A) in dem Leistungsnetz (400); und
- Erhalten von Stromflussrichtungen in dem Leistungsnetz (400) unter Verwendung von für das Leistungsnetz (400) verfügbaren Konfigurationsdaten.

3. Verfahren nach einem der Ansprüche 1 und 2, wobei die Schutzzonen (401, 402, 403, 404, 405, 406, 407, 408) eine oder mehrere einer geschützten Zone (401, 402, 403, 404, 405 oder 406), einer ungeschützten Zone (408) und einer überlappenden Zone (407) umfassen.

4. Verfahren nach Anspruch 1, wobei die Reaktion der einen oder der mehreren Schutzeinheiten (401A, 402A, 403A, 404A, 405A, 406A) eine Detektion des Netzfehlers (409) oder eine Nichtdetektion des Netzfehlers (409) umfasst.

5. Verfahren nach Anspruch 1, wobei das Verwalten der Konfiguration der einen oder der mehreren Schutzeinheiten (401A, 402A, 403A, 404A, 405A oder 406A) Folgendes umfasst:
- Empfangen eines oder mehrerer Konfigurationsparameter, die mit jeder der Schutzzonen (401, 402, 403, 404, 405, 406, 407, 408) assoziiert sind, in denen die Reaktion der Schutzeinheit (401A, 402A, 403A, 404A, 405A oder 406A) eine Nichtdetektion des Netzfehlers (409) ist, unter Verwendung von für das Leistungsnetz (400) verfügbaren Konfigurationsdaten; und
- Bestimmen einer Konfiguration, die für jede der Schutzeinheiten (401A, 402A, 403A, 404A, 405A oder 406A) anwendbar ist, basierend auf den Konfigurationsparametern aus einer Leistungsnetzdatenbank (205).

6. Verfahren nach Anspruch 5, wobei die Konfigurationsparameter Konfigurationsdaten umfassen, die mit jedem in der Schutzzone (401, 402, 403, 404, 405, 406, 407, 408) vorhandenen Netzelement assoziiert sind.

7. Schutzkonfigurationssystem (200) zum Konfigurieren einer Schutzeinheit (401A, 402A, 403A, 404A, 405A oder 406A) in einem Leistungsnetz (400), wobei das Schutzkonfigurationssystem (200) Folgendes umfasst:
- ein nichtflüchtiges computerlesbares Speichermedium, das Computerprogrammanweisungen speichert, die durch Module des Schutzkonfigurationssystem (200) definiert sind;
- mindestens einen Prozessor (301), der kommunikativ mit dem nichtflüchtigen computerlesbaren Speichermedium gekoppelt ist, wobei der mindestens eine Prozessor (301) die definierten Computerprogrammanweisungen ausführt; und
- wobei die Module des Schutzkonfigurationssystems (200) Folgendes umfassen:
∘ ein Schutzzonenbestimmungsmodul (201), das dazu konfiguriert ist, eine oder mehrere Schutzzonen (401, 402, 403, 404, 405, 406, 407, 408) in dem Leistungsnetz (400) basierend auf Schutzeinheiten (401A, 402A, 403A, 404A, 405A, 406A), Messvorrichtungen (401B, 401C, 401D, 402B, 403B, 403C, 404B, 405B, 405C, 406B, 406C, 407A) und Stromflussrichtungen zu bestimmen, wobei die Schutzzonen (401, 402, 403, 404, 405, 406, 407, 408) eine oder mehrere einer geschützten Zone (401, 402, 403, 404, 405 oder 406), einer ungeschützten Zone (408) und einer überlappenden Zone (407) umfassen;
∘ ein Fehlersimulationsmodul (202), das dazu konfiguriert ist, mindestens einen Netzfehler (409) bei jeder der Schutzzonen (401, 402, 403, 404, 405, 406, 407, 408) durch Bestimmen eines Spannungsnennwerts und eines Stromnennwerts zu simulieren, die mit jeder der Schutzzonen (401, 402, 403, 404, 405, 406, 407, 408) assoziiert sind;
∘ ein Nennwertbestimmungsmodul (202A) des Fehlersimulationsmoduls (200), das dazu konfiguriert ist, den Spannungsnennwert und den Stromnennwert zu bestimmen, die mit jeder der Schutzzonen (401, 402, 403, 404, 405, 406, 407, 408) assoziiert sind;
∘ein Fehlerdatenverwaltungsmodul (202B), das dazu konfiguriert ist, Fehlerdaten aus einer Leistungsnetzdatenbank (205) basierend auf dem durch das Nennwertbestimmungsmodul (202A) bestimmten Spannungsnennwert und Stromnennwert zu erhalten, wobei die Leistungsnetzdatenbank (205) historische Daten speichert, die Fehler betreffen, die bei verschiedenen Topologien in einem Leistungsnetz (400) aufgetreten sind, wobei die Leistungsnetzdatenbank (205) als eine verteilte Datenbank konfiguriert ist, wobei die verteilte Datenbank zum Kommunizieren miteinander über ein Kommunikationsnetz (206) integriert ist;
∘ wobei das Fehlersimulationsmodul (202) ferner dazu konfiguriert ist, den mindestens einen Netzfehler (409) in die damit assoziierte Schutzzone (401, 402, 403, 404, 405, 406, 407, 408) durch Anwenden des simulierten mindestens einen Netzfehlers (409) in jeder der Schutzzonen (401, 402, 403, 404, 405, 406, 407, 408) zum Verifizieren und Validieren der Konfiguration jeder der Schutzeinheiten (401A, 402A, 403A, 404A, 405A, 406A) virtuell einzuspeisen; und
∘ ein Konfigurationsverwaltungsmodul (203), das dazu konfiguriert ist, die Konfiguration einer oder mehrerer Schutzeinheiten (401A, 402A, 403A, 404A, 405A oder 406A) der Schutzzonen (401, 402, 403, 404, 405, 406, 407, 408) basierend auf einer Reaktion der einen oder der mehreren Schutzeinheiten (401A, 402A, 403A, 404A, 405A, 406A) auf den Netzfehler (409) zu verwalten, wobei die Reaktion der einen oder der mehreren Schutzeinheiten (401A, 402A, 403A, 404A, 405A, 406A) eine Detektion des Netzfehlers (409) oder eine Nichtdetektion des Netzfehlers (409) umfasst.

8. Schutzkonfigurationssystem (200) nach Anspruch 7, wobei das Schutzzonenbestimmungsmodul (201) Folgendes umfasst:
- ein Schutzeinheitsidentifikationsmodul (201A), das dazu konfiguriert ist, eine oder mehrere Schutzeinheiten (401A, 402A, 403A, 404A, 405A, 406A) in dem Leistungsnetz (400) zu identifizieren;
- ein Messvorrichtungsidentifikationsmodul (201B), das dazu konfiguriert ist, mindestens eine Messvorrichtung (401B, 401C, 401D, 402B, 403B, 403C, 404B, 405B, 405C, 406B, 406C, 407A) in dem Leistungsnetz (400) zu identifizieren; und
- ein Flussrichtungsidentifikationsmodul (201C), das dazu konfiguriert ist, Stromflussrichtungen in dem Leistungsnetz (400) unter Verwendung von für das Leistungsnetz (400) verfügbaren Konfigurationsdaten zu erhalten.

9. Schutzkonfigurationssystem (200) nach Anspruch 7, wobei das Konfigurationsverwaltungsmodul (203) Folgendes umfasst:
- ein Parameterempfangsmodul (203A), das dazu konfiguriert ist, einen oder mehrere Konfigurationsparameter, die mit jeder der Schutzzonen (401, 402, 403, 404, 405, 406, 407, 408) assoziiert sind, in denen die Reaktion der Schutzeinheit (401A, 402A, 403A, 404A, 405A oder 406A) eine Nichtdetektion des Netzfehlers (409) ist, unter Verwendung von für das Leistungsnetz (400) verfügbaren Konfigurationsdaten zu empfangen, wobei die Konfigurationsparameter Konfigurationsdaten umfassen, die mit jedem in der Schutzzone (401, 402, 403, 404, 405, 406, 407, 408) vorhandenen Netzelement assoziiert sind; und
- ein Konfigurationsbestimmungsmodul (203B), das dazu konfiguriert ist, eine Konfiguration, die für jede der Schutzeinheiten (401A, 402A, 403A, 404A, 405A oder 406A) anwendbar ist, basierend auf den Konfigurationsparametern aus einer Leistungsnetzdatenbank (205) zu bestimmen.

10. Computerprogrammprodukt, umfassend ein nichtflüchtiges computerlesbares Speichermedium, wobei das nichtflüchtige computerlesbare Speichermedium Computerprogrammcodes speichert, die Anweisungen umfassen, die durch mindestens einen Prozessor (301) ausführbar sind, wobei die Computerprogrammcodes Folgendes umfassen:
- einen ersten Computerprogrammcode zum Bestimmen einer oder mehrerer Schutzzonen (401, 402, 403, 404, 405, 406, 407, 408) in dem Leistungsnetz (400) basierend auf Schutzeinheiten (401A, 402A, 403A, 404A, 405A, 406A), Messvorrichtungen (401B, 401C, 401D, 402B, 403B, 403C, 404B, 405B, 405C, 406B, 406C, 407A) und Stromflussrichtungen, wobei die Schutzzonen (401, 402, 403, 404, 405, 406, 407, 408) eine oder mehrere einer geschützten Zone (401, 402, 403, 404, 405 oder 406), einer ungeschützten Zone (408) und einer überlappenden Zone (407) umfassen;
- einen zweiten Computerprogrammcode zum Simulieren mindestens eines Netzfehlers (409) bei jeder der Schutzzonen (401, 402, 403, 404, 405, 406, 407, 408),
wobei der zweite Computerprogrammcode einen achten Computerprogrammcode zum Bestimmen eines Spannungsnennwerts und eines Stromnennwerts, die mit jeder der Schutzzonen (401, 402, 403, 404, 405, 406, 407, 408) assoziiert sind, umfasst,
wobei der zweite Computerprogrammcode ferner einen neunten Programmcode zum Erhalten von Fehlerdaten aus einer Leistungsnetzdatenbank (205) basierend auf dem Spannungsnennwert und dem Stromnennwert umfasst,
wobei die Leistungsnetzdatenbank (205) historische Daten in Bezug auf Fehler speichert, die bei verschiedenen Topologien in einem Leistungsnetz (400) aufgetreten sind,
wobei die Leistungsnetzdatenbank (205) als eine verteilte Datenbank konfiguriert ist, wobei die verteilte Datenbank zum Kommunizieren miteinander über ein Kommunikationsnetz (206) integriert ist;
- einen dritten Computerprogrammcode zum virtuellen Einspeisen des mindestens einen Netzfehlers (409) in die damit assoziierte Schutzzone (401, 402, 403, 404, 405, 406, 407, 408) durch Anwenden des simulierten mindestens einen Netzfehlers (409) in jeder der Schutzzonen (401, 402, 403, 404, 405, 406, 407, 408) zum Verifizieren und Validieren der Konfiguration jeder der Schutzeinheiten (401A, 402A, 403A, 404A, 405A, 406A); und
- einen vierten Computerprogrammcode zum Verwalten der Konfiguration der einen oder der mehreren Schutzeinheiten (401A, 402A, 403A, 404A, 405A oder 406A) der Schutzzonen (401, 402, 403, 404, 405, 406, 407, 408) basierend auf einer Reaktion der einen oder der mehreren Schutzeinheiten (401A, 402A, 403A, 404A, 405A, 406A) auf den Netzfehler (409), wobei die Reaktion der einen oder der mehreren Schutzeinheiten (401A, 402A, 403A, 404A, 405A, 406A) eine Detektion des Netzfehlers (409) oder eine Nichtdetektion des Netzfehlers (409) umfasst.

11. Computerprogrammprodukt nach Anspruch 10, wobei der erste Computerprogrammcode Folgendes umfasst:
- einen fünften Computerprogrammcode zum Identifizieren einer oder mehrerer Schutzeinheiten (401A, 402A, 403A, 404A, 405A, 406A) in dem Leistungsnetz (400);
- einen sechsten Computerprogrammcode zum Identifizieren mindestens einer Messvorrichtung (401B, 401C, 401D, 402B, 403B, 403C, 404B, 405B, 405C, 406B, 406C, 407A) in dem Leistungsnetz (400); und
- einen siebten Computerprogrammcode zum Erhalten von Stromflussrichtungen in dem Leistungsnetz (400) unter Verwendung von für das Leistungsnetz (400) verfügbaren Konfigurationsdaten.

12. Computerprogrammprodukt nach Anspruch 10, wobei der dritte Computerprogrammcode Folgendes umfasst:
- einen zehnten Computerprogrammcode zum Empfangen eines oder mehrerer Konfigurationsparameter, die mit jeder der Schutzzonen (401, 402, 403, 404, 405, 406, 407, 408) assoziiert sind, in denen die Reaktion der Schutzeinheit (401A, 402A, 403A, 404A, 405A oder 406A) eine Nichtdetektion des Netzfehlers (409) ist, unter Verwendung von für das Leistungsnetz (400) verfügbaren Konfigurationsdaten, wobei die Konfigurationsparameter Konfigurationsdaten umfassen, die mit jedem in der Schutzzone (401, 402, 403, 404, 405, 406, 407, 408) vorhandenen Netzelement assoziiert sind; und
- einen elften Computerprogrammcode zum Bestimmen einer Konfiguration, die für jede der Schutzeinheiten (401A, 402A, 403A, 404A, 405A oder 406A) anwendbar ist, basierend auf den Konfigurationsparametern aus einer Leistungsnetzdatenbank (205).

## Revendications

1. Procédé de configuration d'une unité de protection (401A, 402A, 403A, 404A, 405A ou 406A) dans un réseau électrique (400), ledit procédé étant exécuté par au moins un processeur (301), ledit procédé comprenant les étapes suivantes :
- déterminer une ou plusieurs zones de protection (401, 402, 403, 404, 405, 406, 407, 408) dans le réseau électrique (400) sur la base d'unités de protection (401A, 402A, 403A, 404A, 405A, 406A), de dispositifs de mesure (401B, 401C, 401D, 402B, 403B, 403C, 404B, 405B, 405C, 406B, 406C, 407A) et de directions de circulation de courant, où une zone de protection (401, 402, 403, 404, 405, 406, 407, 408) est une zone à l'intérieur du réseau électrique (400) ayant une ou plusieurs unités de protection (401A, 402A, 403A, 404A, 405A, 406A) ;
- simuler au moins un défaut de réseau (409) pour chacune des zones de protection (401, 402, 403, 404, 405, 406, 407, 408) en déterminant une valeur nominale de tension et une valeur nominale de courant associées à chacune des zones de protection (401, 402, 403, 404, 405, 406, 407, 408),
où la simulation de l'au moins un défaut de réseau (409) pour chacune des zones de protection (401, 402, 403, 404, 405, 406, 407, 408) comprend en outre d'obtenir des données de panne auprès d'une base de données de réseau électrique (205) sur la base de la tension nominale et du courant nominal,
où la base de données de réseau électrique (205) stocke des données historiques de pannes survenues pour différentes topologies dans un réseau électrique (400),
où la base de données de réseau électrique (205) est configurée comme une base de données distribuée, ladite base de données distribuée étant intégrée pour communiquer sur un réseau de communication (206) ;
- injecter virtuellement l'au moins un défaut de réseau (409) dans la zone de protection (401, 402, 403, 404, 405, 406, 407, 408) qui lui est associée en appliquant l'au moins un défaut de réseau (409) simulé dans chacune des zones de protection (401, 402, 403, 404, 405, 406, 407, 408) pour vérifier et valider la configuration de chacune des unités de protection (401A, 402A, 403A, 404A, 405A, 406A) ; et
- gérer la configuration d'une ou plusieurs unités de protection (401A, 402A, 403A, 404A, 405A ou 406A) des zones de protection (401, 402, 403, 404, 405, 406, 407, 408), sur la base d'une réponse des une ou plusieurs unités de protection (401A, 402A, 403A, 404A, 405A, 406A) à la panne de réseau (409).

2. Procédé selon la revendication 1, dans lequel la détermination d'une ou plusieurs zones de protection (401, 402, 403, 404, 405, 406, 407, 408), comprend les étapes suivantes :
- identifier une ou plusieurs unités de protection (401A, 402A, 403A, 404A, 405A, 406A) dans le réseau électrique (400) ;
- identifier au moins un dispositif de mesure (401B, 401C, 401D, 402B, 403B, 403C, 404B, 405B, 405C, 406B, 406C, 407A) dans le réseau électrique (400) ; et
- obtenir des sens de circulation de courant dans le réseau électrique (400) à l'aide des données de configuration disponibles pour le réseau électrique (400).

3. Procédé selon l'une des revendications 1 et 2, dans lequel les zones de protection (401, 402, 403, 404, 405, 406, 407, 408) comprennent une ou plusieurs zones parmi une zone protégée (401, 402, 403, 404, 405 ou 406), une zone non protégée (408) et une zone de recouvrement (407).

4. Procédé selon la revendication 1, dans lequel la réponse des une ou plusieurs unités de protection (401A, 402A, 403A, 404A, 405A, 406A) comprend soit la détection du défaut de réseau (409), soit la non-détection du défaut de réseau (409).

5. Procédé selon la revendication 1, dans lequel la gestion de la configuration des une ou plusieurs unités de protection (401A, 402A, 403A, 404A, 405A ou 406A) comprend les étapes suivantes :
- recevoir un ou plusieurs paramètres de configuration associés à chacune des zones de protection (401, 402, 403, 404, 405, 406, 407, 408) pour lesquelles la réponse de l'unité de protection (401A, 402A, 403A, 404A, 405A ou 406A) est une non détection du défaut de réseau (409), en utilisant des données de configuration disponibles pour le réseau électrique (400) ; et
- déterminer une configuration applicable pour chacune des unités de protection (401A, 402A, 403A, 404A, 405A ou 406A) sur la base des paramètres de configuration, à partir d'une base de données de réseau électrique (205).

6. Procédé selon la revendication 5, dans lequel les paramètres de configuration comprennent des données de configuration associées à chaque élément de réseau présent dans la zone de protection (401, 402, 403, 404, 405, 406, 407, 408).

7. Système de configuration de protection (200) pour configurer une unité de protection (401A, 402A, 403A, 404A, 405A ou 406A) dans un réseau électrique (400), ledit système de configuration de protection (200) comprenant :
- un support de stockage non transitoire lisible par ordinateur stockant des instructions de programme informatique définies par des modules dudit système de configuration de protection (200) ;
- au moins un processeur (301) couplé de manière communicative au support de stockage non transitoire lisible par ordinateur, ledit au moins un processeur (301) exécutant lesdites instructions de programme informatique définies ; et
- lesdits modules dudit système de configuration de protection (200) comprenant :
∘ un module de détermination de zone de protection (201) configuré pour déterminer une ou plusieurs zones de protection (401, 402, 403, 404, 405, 406, 407, 408) dans le réseau électrique (400) sur la base d'unités de protection (401A, 402A, 403A, 404A, 405A, 406A), de dispositifs de mesure (401B, 401C, 401D, 402B, 403B, 403C, 404B, 405B, 405C, 406B, 406C, 407A) et de directions de circulation de courant, où les zones de protection (401, 402, 403, 404, 405, 406, 407, 408) comprennent une ou plusieurs zones parmi une zone protégée (401, 402, 403, 404, 405 ou 406), une zone non protégée (408), et une zone de recouvrement (407) ;
∘ un module de simulation de défaut (202) configuré pour simuler au moins un défaut de réseau (409) pour chacune des zones de protection (401, 402, 403, 404, 405, 406, 407, 408) en déterminant une valeur nominale de tension et une valeur nominale de courant associées à chacune des zones de protection (401, 402, 403, 404, 405, 406, 407, 408) ;
∘ un module de détermination de valeur nominale (202A) du module de simulation de défaut (200) configuré pour déterminer la tension nominale et le courant nominal associés à chacune des zones de protection (401, 402, 403, 404, 405, 406, 407, 408) respectives ;
∘ un module de gestion de données de défaut (202B) configuré pour obtenir des données de défaut d'une base de données de réseau électrique (205) à partir de la tension nominale et du courant nominal, déterminés par le module de détermination de valeurs nominales (202A), où la base de données de réseau électrique (205) stocke des données historiques de défauts survenus pour différentes topologies dans un réseau électrique (400),
où la base de données de réseau électrique (205) est configurée comme une base de données distribuée, ladite base de données distribuée étant intégrée pour communiquer sur un réseau de communication (206) ;
∘ le module de simulation de défaut (202) étant configuré en outre pour injecter virtuellement l'au moins un défaut de réseau (409) dans la zone de protection (401, 402, 403, 404, 405, 406, 407, 408) qui lui est associée en appliquant l'au moins un défaut de réseau (409) simulé dans chacune des zones de protection (401, 402, 403, 404, 405, 406, 407, 408) pour vérifier et valider la configuration de chacune des unités de protection (401A, 402A, 403A, 404A, 405A, 406A) ; et
∘ un module de gestion de configuration (203) configuré pour gérer la configuration d'une ou de plusieurs unités de protection (401A, 402A, 403A, 404A, 405A ou 406A) des zones de protection (401, 402, 403, 404, 405, 406, 407, 408), sur la base d'une réponse des une ou plusieurs unités de protection (401A, 402A, 403A, 404A, 405A, 406A) à la panne de réseau (409), la réponse des une ou plusieurs unités de protection (401A, 402A, 403A, 404A, 405A, 406A) comprenant soit la détection du défaut de réseau (409), soit la non-détection du défaut de réseau (409).

8. Système de configuration de protection (200) selon la revendication 7, dans lequel le module de détermination de la zone de protection (201), comprend :
- un module d'identification d'unité de protection (201A) configuré pour identifier une ou plusieurs unités de protection (401A, 402A, 403A, 404A, 405A, 406A) dans le réseau électrique (400) ;
- un module d'identification de dispositif de mesure (201B) configuré pour identifier au moins un dispositif de mesure (401B, 401C, 401D, 402B, 403B, 403C, 404B, 405B, 405C, 406B, 406C, 407A) dans le réseau électrique (400) ; et
- un module d'identification de direction de circulation (201C) configuré pour obtenir des sens de circulation de courant dans le réseau électrique (400) en utilisant des données de configuration disponibles pour le réseau électrique (400).

9. Système de configuration de protection (200) selon la revendication 7, dans lequel le module de gestion de configuration (203) comprend :
- un module de réception de paramètres (203A) configuré pour recevoir un ou plusieurs paramètres de configuration associés à chacune des zones de protection (401, 402, 403, 404, 405, 406, 407, 408) dans lesquelles la réponse de l'unité de protection (401A, 402A, 403A, 404A, 405A ou 406A) est une non détection d'une panne de réseau (409), en utilisant des données de configuration disponibles pour le réseau électrique (400), où les paramètres de configuration comprennent des données de configuration associées à chaque élément de réseau présent dans la zone de protection (401, 402, 403, 404, 405, 406, 407, 408) ; et
- un module de détermination de configuration (203B) configuré pour déterminer une configuration applicable pour chacune des unités de protection (401A, 402A, 403A, 404A, 405A ou 406A) sur la base des paramètres de configuration, à partir d'une base de données de réseau électrique (205).

10. Produit logiciel comprenant un support de stockage non transitoire lisible par ordinateur, ledit support de stockage non transitoire lisible par ordinateur stockant des codes de programme informatique qui comprennent des instructions exécutables par l'au moins un processeur (301), lesdits codes de programme informatique comprenant :
- un premier code de programme informatique pour déterminer une ou plusieurs zones de protection (401, 402, 403, 404, 405, 406, 407, 408) dans le réseau électrique (400) sur la base d'unités de protection (401A, 402A, 403A, 404A, 405A, 406A), de dispositifs de mesure (401B, 401C, 401D, 402B, 403B, 403C, 404B, 405B, 405C, 406B, 406C, 407A) et de directions de circulation de courant, où les zones de protection (401, 402, 403, 404, 405, 406, 407, 408) comprennent une ou plusieurs zones parmi une zone protégée (401, 402, 403, 404, 405 ou 406), une zone non protégée (408), et une zone de recouvrement (407) ;
- un deuxième code programme informatique pour simuler au moins un défaut de réseau (409) pour chacune des zones de protection (401, 402, 403, 404, 405, 406, 407, 408),
où le deuxième code programme informatique comprend un huitième code programme informatique pour déterminer une tension nominale et un courant nominal associés à chacune des zones de protection (401, 402, 403, 404, 405, 406, 407, 408),
où le deuxième code de programme informatique comprend en outre un neuvième code de programme permettant d'obtenir des données de défaut à partir d'une base de données de réseau électrique (205) sur la base de la tension nominale et du courant nominal, où la base de données de réseau électrique (205) stocke des données historiques de pannes survenues pour différentes topologies dans un réseau électrique (400),
où la base de données de réseau électrique (205) est configurée comme une base de données distribuée, ladite base de données distribuée étant intégrée pour communiquer sur un réseau de communication (206) ;
- un troisième code de programme informatique pour injecter virtuellement l'au moins un défaut de réseau (409) dans la zone de protection (401, 402, 403, 404, 405, 406, 407, 408) qui lui est associée en appliquant l'au moins un défaut de réseau (409) simulé dans chacune des zones de protection (401, 402, 403, 404, 405, 406, 407, 408) pour vérifier et valider la configuration de chacune des unités de protection (401A, 402A, 403A, 404A, 405A, 406A) ; et
- un quatrième code de programme informatique pour gérer la configuration d'une ou de plusieurs unités de protection (401A, 402A, 403A, 404A, 405A ou 406A) des zones de protection (401, 402, 403, 404, 405, 406, 407, 408), sur la base d'une réponse des une ou plusieurs unités de protection (401A, 402A, 403A, 404A, 405A, 406A) à la panne de réseau (409), la réponse des une ou plusieurs unités de protection (401A, 402A, 403A, 404A, 405A, 406A) comprenant soit la détection du défaut de réseau (409), soit la non-détection du défaut de réseau (409).

11. Produit programme informatique selon la revendication 10, dans lequel le premier code de programme informatique comprend :
- un cinquième code de programme informatique pour identifier une ou plusieurs unités de protection (401A, 402A, 403A, 404A, 405A, 406A) dans le réseau électrique (400) ;
- un sixième code de programme informatique pour identifier au moins un dispositif de mesure (401B, 401C, 401D, 402B, 403B, 403C, 404B, 405B, 405C, 406B, 406C, 407A) dans le réseau électrique (400) ; et
- un septième code de programme informatique permettant d'obtenir des sens de circulation de courant dans le réseau électrique (400) en utilisant des données de configuration disponibles pour le réseau électrique (400).

12. Produit programme informatique selon la revendication 10, dans lequel le troisième code de programme informatique comprend :
- un dixième code de programme informatique pour recevoir un ou plusieurs paramètres de configuration associés à chacune des zones de protection (401, 402, 403, 404, 405, 406, 407, 408) dans lesquelles la réponse de l'unité de protection (401A, 402A, 403A, 404A, 405A ou 406A) est une non détection d'une panne de réseau (409), en utilisant des données de configuration disponibles pour le réseau électrique (400), où les paramètres de configuration comprennent des données de configuration associées à chaque élément de réseau présent dans la zone de protection (401, 402, 403, 404, 405, 406, 407, 408) ; et
- un onzième code de programme informatique pour déterminer une configuration applicable pour chacune des unités de protection (401A, 402A, 403A, 404A, 405A ou 406A) sur la base des paramètres de configuration, à partir d'une base de données de réseau électrique (205).
